# EUROPÄISCHE PATENTSCHRIFT

(11) **EP 1 164 323 B1**
(45) Veröffentlichungstag und Bekanntmachung des Hinweises auf die Patenterteilung: **06.04.2005**
(21) Anmeldenummer: 01114199.1
(22) Anmeldetag: 12.06.2001
(51) Int. Cl.: F16K 24/04, H05K 5/02

(54) **Entlüftungsvorrichtung**
Air relief device
Dispositif de décharge d'air

(30) Priorität: 14.06.2000 DE 10029291
(43) Veröffentlichungstag der Anmeldung: 19.12.2001
(73) Patentinhaber: ROBERT BOSCH GMBH, 70442 Stuttgart (DE)
(72) Erfinder: Witowski, Edgar, 71277 Rutesheim (DE); Widera, Jörg, 70839 Gerlingen (DE); Jungeilges, Rainer, 74232 Abstatt (DE); Troltsch, Karl, 71701 Schwieberdingen (DE)
(74) Vertreter: Maiwald Patentanwalts GmbH

(56) Entgegenhaltungen:
- DE-A- 4 023 119
- FR-A- 2 656 974
- US-A- 5 381 563
- US-A- 5 434 748

## Beschreibung

### Stand der Technik

Die Erfindung geht aus von einer Einrichtung zur gekapselten Anordnung einer extern ansteuerbaren, Druckmittel versorgten Funktionseinheit entsprechend der Gattung des Anspruchs 1.

Funktionseinheiten, beispielsweise in Form pneumatischer Steuerventile sind hinlänglich bekannt. Diese sind mit einer elektrischen Ansteuerung versehen, um Druckmittelverbindungen zwischen Druckmittelkanälen bedarfsgerecht zu regeln. Derartige Funktionseinheiten lassen sich auch in explosionsgefährdeter Umgebung betreiben, wenn sichergestellt ist, dass bei der elektrischen Ansteuerung eventuell entstehende Funkenbildungen keine Brände oder Explosionen auslösen.
Dazu ist es bekannt derartige Funktionseinheiten zu kapseln, d.h. im Inneren eines nach außen abgeschlossenen Gehäusekörpers anzuordnen. Allenfalls zur elektrischen Kontaktierung und zur Kontaktierung mit Druckmittel führenden Leitungen sind am Gehäusekörper abdichtbare Durchführungen vorgesehen.

Ein Problem besteht nun darin, dass es aufgrund von Undichtigkeiten an der Kontaktierung oder an den Druckmittel führenden Leitungen zu einem Druckanstieg im Innenraum des Gehäusekörpers kommen kann. Damit ein solcher Druckanstieg nicht zu Schäden führt sind Mittel zur Druckbegrenzung vorgesehen. Diese geben beim Überschreiten eines Druckschwellwerts Entlastungsöffnungen des Gehäusekörpers zur Umgebung hin frei. Aufgrund des höheren Druckniveaus im Innenraum kann dabei kein in der Umgebung enthaltenes, entzündliches oder explosives Medium in den Gehäusekörper einströmen.

Diese Mittel zur Druckbegrenzung, die als separate Baueinheiten in Form sogenannter Druckbegrenzungsventile ebenfalls allgemein bekannt sind, sind an einer Wandung des Gehäusekörpers befestigt. Neben dafür vorzusehenden Befestigungsmöglichkeiten entstehen dadurch zusätzliche Montagearbeitsgänge. Zudem sind Druckbegrenzungsventile aufwendig aufgebaut, entsprechend teuer und nehmen viel Bauraum in Anspruch.

### Vorteile der Erfindung

Demgegenüber weist eine Einrichtung zur gekapselten Anordnung einer extern ansteuerbaren, Druckmittel versorgten Funktionseinheit mit den kennzeichnenden Merkmalen des Anspruchs 1 den Vorteil auf, dass sie sehr einfach im Aufbau ist, mit Ausnahme eines leicht herstell- und montierbaren separaten Bauteils zusammen mit dem Gehäusekörper in einem Arbeitsgang darstellbar ist und wenig Bauraum beansprucht. Die Einrichtung ist in Vollkunststoff realisierbar, ist dadurch beständig gegenüber Korrosion und elektrisch nicht leitend. Fertigungsbedingte Toleranzschwankungen bei der Gehäusekörperherstellung können leicht ausgeglichen werden. Zudem ist die Einrichtung Bestandteil des zu schützenden Bauteils selbst, so daß ein Funktionsausfall der Einrichtung zwangsläufig ausgeschlossen ist.

Weitere Vorteile oder vorteilhafte Weiterbildungen der Erfindung ergeben sich aus den Unteransprüchen und der Beschreibung.

### Zeichnung

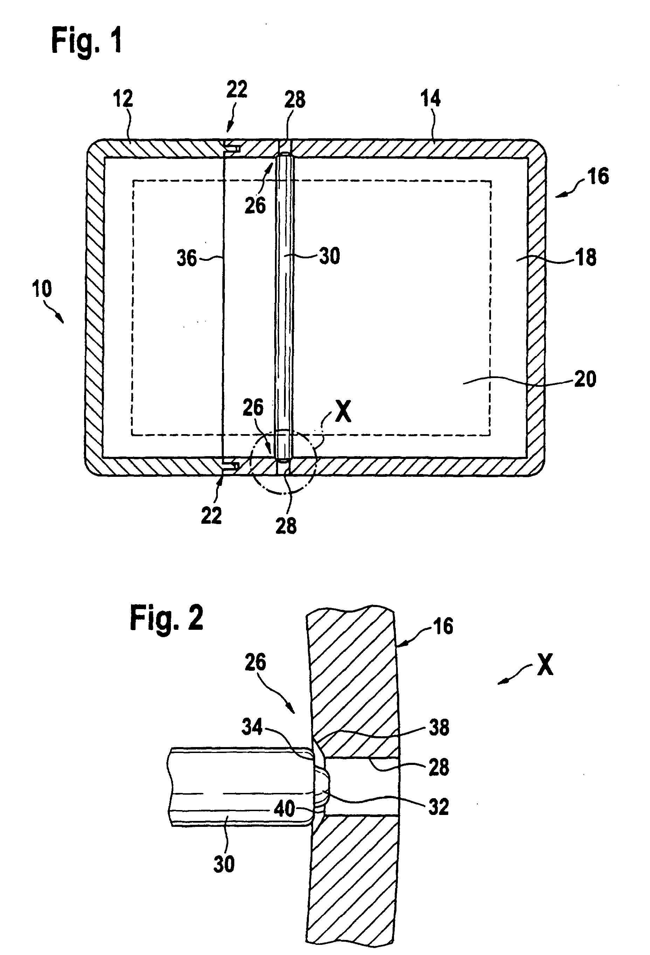

Ein Ausführungsbeispiel der Erfindung ist in der Zeichnung dargestellt und in der nachfolgenden Beschreibung näher erläutert. Die Figur 1 zeigt in einer schematisierten Darstellung eine mögliche Ausführungsvariante für eine erfindungsgemäße Einrichtung im Längsschnitt; in Figur 2 ist ein Detail X nach Figur 1 vergrößert dargestellt. Während in Figur 1 die Einrichtung im geschlossenen Zustand dargestellt ist, zeigt sie Figur 2 im geöffneten Zustand.

### Beschreibung des Ausführungsbeispiels

In der Figur 1 ist eine Einrichtung zur gekapselten Anordnung einer extern ansteuerbaren, Druckmittel versorgten Funktionseinheit mit der Positionsnummer 10 bezeichnet. Im vorliegenden Fall handelt es sich dabei um einen aus zwei Halbschalen 12, 14 zusammengefügten Gehäusekörper 16, dessen Wandungen eine nach außen abgedichteten Innenraum 18 umschließen. Im Gehäusekörper 16 ist eine nicht im Detail dargestellte Funktionseinheit 20, beispielsweise ein elektrisch ansteuerbares Schaltventil an sich bekannter Bauart angeordnet.

Die beiden Halbschalen 12 und 14 sind entlang einer in Figur 1 vertikal verlaufenden Nut- /Feder-Verbindung 22 zusammengefügt und druckmitteldicht miteinander verbunden. Eine derartige Verbindung kann durch Verpressen, Verkleben, Verschweißen, Verschrauben der Halbschalen 12, 14 oder durch dazu äquivalente Methoden realisiert sein. Eine druckdichte Verbindung ist erforderlich, um den Innenraum 18 bzw. die darin befindliche Funktionseinheit 20 gegenüber der Umgebung abzukapseln. Lediglich zur elektrischen Kontaktierung und zur Versorgung dieser Funktionseinheit 20 mit Druckmittel können abdichtbare Durchführungen (nicht gezeichnet) im Gehäusekörper 16 vorgesehen sein.

Um einen Druckaufbau im Innenraum 18 zu vermeiden, wie er beispielsweise bei einer schadhaften Kontaktierung der Funktionseinheit 20, bei Schäden an den druckmittelführenden Leitungen oder aufgrund der Abführung des Druckmittels entstehen könnte, sind Mittel 26 zur Druckbegrenzung vorgesehen. Diese steuern wenigstens eine Entlastungsöffnung 28 des Gehäusekörpers 16 zur Umgebung. Im Ausführungsbeispiel sind exemplarisch zwei Entlastungsöffnungen 28 ausgebildet, die an zwei einander gegenüber liegenden Wandungen des Gehäusekörpers 16 angeordnet sind. Im dargestellten Zustand sind die Entlastungsöffnungen 28 mittels eines im Innenraum 18 befindlichen Ventilstifts 30 verschlossen. Dieser Ventilstift 30 ist dazu zwischen die einander gegenüberliegenden Wandungen des Gehäusekörpers 16 eingespannt. Der Ventilstift 30 ist ein stabförmiges, starres Gebilde, an dessen Enden Zentrierzapfen 32 angeformt sind. Diese ragen in die zugeordneten Entlastungsöffnungen 28 abschnittsweise hinein und stellen aufgrund ihrer Abmessungen auch im geöffneten Zustand der Entlastungsöffnungen 28 die Führung des Ventilstifts 24 sicher. Im Ausführungsbeispiel ist der Ventilstift 30 parallel zur Trennebene 36 zwischen den beiden Halbschalen 12 und 14 angeordnet, ohne jedoch auf diese Anordnung eingeschränkt zu sein.

Der Figur 2 entnehmbar ist, dass die Zentrierzapfen 32 einen kleineren Außendurchmesser als der übrige Ventilstift 30 haben, so dass sich an dessen Enden ringförmige Dichtflächen 34 ergeben. Diese bilden zusammen mit kalottenförmigen Vertiefungen 38 der Entlastungsöffnungen 28 am Gehäusekörper 16 Sitzventile aus, wobei die Vertiefungen 38 als Ventilsitze wirken.

Vorzugsweise sind die Halbschalen 12 und 14 sowie der Ventilstift 30 aus Kunststoff hergestellt, weil dadurch die Bauteile besonders einfach und preisgünstig produzierbar sind, elektrisch nicht leiten, was für die Verwendung der Einrichtung 10 in explosionsgefährdeter Umgebung wichtig ist und keiner Korrosion unterliegen. Mit Hilfe der kalottenförmigen Vertiefungen 38 läßt sich die herstellungsbedingte Formtrennebene 40 der Halbschalen 12, 14 konstruktiv abseits des Ventilsitzes ausbilden.
Zusammen mit dem Ventilstift 30 ist es möglich Fertigungstoleranzen der Halbschalen 12, 14 und ihrer Entlastungsöffnungen 28 auszugleichen. Beides wirkt sich in äußerst guten Dichteigenschaften der vorgeschlagenen Mittel 26 zur Druckbegrenzung aus.

Die beschriebene Einrichtung 10 funktioniert in der Weise, dass sich im Falle des Überschreitens eines Druckschwellwerts im Innenraum 18 des Gehäusekörpers 16 zumindest die Wandungen, an denen sich der Ventilstift 30 abgestützt, nach außen wölben. Um die Deformation nur dieser bestimmten Wandungen sicherzustellen, kann beispielsweise deren Wandungsdicke gegenüber der der übrigen Wandungen reduziert sein. Aufgrund der Deformation hebt der Ventilstift 30 von den Ventilsitzen ab und gibt die Entlastungsöffnungen 28 frei, so dass sich der Überdruck des Innenraums 18 zur Umgebung hin entspannen kann, ohne dass in der Umgebung befindliches Medium in den Innenraum 18 einströmt. Mit abnehmenden Überdruck nehmen die Wandungen des Gehäusekörpers 16 aufgrund ihrer Elastizität wieder ihre Ausgangsstellung ein und verschließen dabei die Entlastungsöffnungen 28 wieder. Aufgrund der Anordnung der Entlastungsöffnungen 28 am Gehäusekörper 16, d.h. am zu schützenden Bauteil selbst, ist ein Versagen der Einrichtung 10 ausgeschlossen, da ein Druckanstieg zwangsläufig mit einer Deformation der Wandung einhergeht.

Abweichend vom dargestellten Ausführungsbeispiel wäre es durchaus möglich mit dem Ventilstift 30 auch nur eine bzw. mehr als zwei Entlastungsöffnungen 28 zu steuern, wobei im letztgenannten Fall ein Ventilstift 30 mit Verzweigungen oder mehrere separate Ventilstifte 30 vorzusehen sind. Ferner wäre es denkbar den Ventilstift 30 mit einem Ende an der Innenseite einer Wandung festzulegen oder den Ventilstift 30 sogar einteilig an einer der Halbschalen 12 oder 14 anzuformen. Anstelle eines aus zwei Halbschalen 12 oder 14 aufgebauten Gehäusekörpers 16 wäre auch ein topfförmiger Gehäusekörper 16 mit Deckel vorstellbar. Über die Anzahl und die Gestaltung der Entlastungsöffnungen 28 und der Vertiefungen 38 ließen sich des weiteren Drosselcharakteristiken einstellen, sofern ein Anwendungsfall dies erfordert.

Darüber hinaus gehende Änderungen oder Ergänzungen am beschriebenen Ausführungsbeispiel sind selbstverständlich möglich, ohne vom Grundgedanken der Erfindung abzuweichen.

## Patentansprüche

1. Einrichtung (10) zur gekapselten Anordnung wenigstens einer extern ansteuerbaren, Druckmittel versorgten Funktionseinheit (20), mit einem Gehäusekörper (16), der mit seinen Wandungen einen zur Umgebung hin abgeschlossenen und die Funktionseinheit (20) aufnehmenden Innenraum (18) umschließt und mit Mitteln (26) zur Druckbegrenzung im Innenraum (18), die wenigstens eine Entlastungsöffnung (28) zur Umgebung steuern, **dadurch gekennzeichnet, dass** die wenigstens eine Entlastungsöffnung (28) an einer Wandung des Gehäusekörpers (16) ausgebildet ist und von wenigstens einem Ventilstift (30) gesteuert ist, der dazu zwischen dieser und einer gegenüberliegenden Wandung eingespannt ist.

2. Einrichtung nach Anspruch 1, **dadurch gekennzeichnet, dass** der Ventilstift (30) ein stabförmiges, starres Bauelement mit Zentrierzapfen (32) an wenigstens einem seiner Enden ist und dass sich zumindest eine der Wandungen des Gehäusekörpers (16), an denen sich der Ventilstift (30) abstützt, bei Überschreitung eines Druckschwellwerts im Innenraum (18) elastisch auswölbt.

3. Einrichtung nach Anspruch 1 oder 2, **dadurch gekennzeichnet, dass** die Entlastungsöffnung (28) zusammen mit dem Ventilstift (30) ein Sitzventil bildet und dass dessen Ventilsitz zur Zentrierung des Ventilstifts (30) als kalottenförmige Vertiefung (38) ausgebildet ist.

4. Einrichtung nach einem der Ansprüche 1 bis 3, **dadurch gekennzeichnet, dass** ein von der Entlastungsöffnung (28) abgewandtes Ende des Ventilstifts (30) am Gehäusekörper (16) festgelegt ist.

5. Einrichtung nach Anspruch 4, **dadurch gekennzeichnet, dass** der Ventilstift (30) einteilig am Gehäusekörper (16) angeformt ist.

6. Einrichtung nach einem der Ansprüche 1 bis 5, **dadurch gekennzeichnet, dass** der Gehäusekörper (16) aus wenigstens zwei Gehäuseteilen (12, 14) aufgebaut ist und dass eine Trennebene (36) zwischen den Gehäuseteilen (12, 14) im wesentlichen senkrecht oder parallel zum Ventilstift (30) verläuft.

7. Einrichtung nach einem der Ansprüche 1 bis 6, **dadurch gekennzeichnet, dass** der Gehäusekörper (16) und der Ventilstift (30) aus Kunststoff hergestellt sind.

8. Einrichtung nach einem der Ansprüche 1 bis 7, **dadurch gekennzeichnet, dass** die zu kapselnde Funktionseinheit (20) ein elektrisch ansteuerbares, pneumatisches Wegeventil ist.

## Claims

1. An apparatus (10) for the encapsulated accommodation of at least one externally driveable functional unit (20) supplied with a pressurized medium, having a housing body (16) enclosing within its walls an interior cavity (18) which is isolated with respect to the environment, receives said functional unit (20) and has means (26) for limiting the pressure in said interior cavity (18) and for controlling at least one relief opening (28) to the environment, **characterized in that** the at least one relief opening (28) is formed at one wall of the housing body (16) and is controlled by at least one valve pin (30) which is clamped between that wall and an opposite wall.

2. The apparatus according to claim 1, **characterized in that** said valve pin (30) is a rod-like rigid structural element with a centering stud (32) on at least one of its ends and wherein at least one of the walls of the housing body (16) against which the valve pin (30) is supported, is elastically deformed to the outside when a pressure threshold value is exceeded in the interior cavity (18).

3. The apparatus according to claim 1 or claim 2, **characterized in that** the relief opening (28) together with the valve pin (30) forms a seat valve and **in that** its valve seat is formed as a dome-shaped recess (38) to center the valve pin (30).

4. The apparatus according to any one of claims 1 to 3, **characterized in that** one end of said valve pin (30) facing away from the relief opening (28) is attached to the housing body (16).

5. The apparatus according to claim 4, **characterized in that** said valve pin (30) is integrally formed at said housing body (16).

6. The apparatus according to any one of claims 1 to 5, **characterized in that** said housing body (16) is constructed of at least two housing portions (12, 14) and **in that** a separating plane (36) between the housing portions (12, 14) extends essentially vertically or parallel to the valve pin (30).

7. The apparatus according to any one of claims 1 to 6, **characterized in that** said housing body (16) and said valve pin (30) are made of plastic.

8. The apparatus according to any one of claims 1 to 7, **characterized in that** the functional unit (20) to be encapsulated is an electrically driveable pneumatic directional valve.

## Revendications

1. Système (10) pour l'agencement encapsulé d'au moins une unité fonctionnelle (20) pilotable de l'extérieur et alimentée en fluide sous pression, comprenant un corps de boîtier (16) qui enferme, avec ses parois, une chambre intérieure (18) refermée vers l'environnement et recevant l'unité fonctionnelle (20), et comprenant des moyens (26) pour limiter la pression dans la chambre intérieure (18), lesquels commandent au moins une ouverture de décharge (28) vers l'environnement, **caractérisé en ce que** ladite au moins une ouverture de décharge (28) est ménagée sur une paroi du corps de boîtier (16), et est pilotée par au moins une tige de valve (30) qui est enserrée à cet effet entre cette paroi et une paroi opposée.

2. Système selon la revendication 1, **caractérisé en ce que** la tige de valve (30) est un élément structurel rigide en forme de tige avec tenon de centrage (32) à l'une au moins de ses extrémités, et **en ce que** l'une au moins des parois du corps de boîtier (16) sur lesquelles s'appuie la tige de valve (30) se bombe élastiquement lors du dépassement d'une valeur seuil de pression dans la chambre intérieure (18).

3. Système selon l'une ou l'autre des revendications 1 et 2, **caractérisé en ce que** l'ouverture de décharge (28) forme conjointement avec la tige de valve (30) un siège de valve, et **en ce que** ce siège de valve est réalisé sous forme d'un renfoncement (38) en forme de calotte pour le centrage de la tige de valve (30).

4. Système selon l'une des revendications 1 à 3, **caractérisé en ce qu'**une extrémité de la tige de valve (30), extrémité détournée de l'ouverture de décharge (28), est immobilisée sur le corps de boîtier (16).

5. Système selon la revendication 4, **caractérisé en ce que** la tige de valve (30) est conformée d'une seule pièce sur le corps de boîtier (16).

6. Système selon l'une des revendications 1 à 5, **caractérisé en ce que** le corps de boîtier (16) est constitué d'au moins deux parties de boîtier (12, 14), et **en ce qu'**un plan de séparation (36) entre les parties de boîtier (12, 14) s'étend essentiellement perpendiculairement ou parallèlement à la tige de valve (30).

7. Système selon l'une des revendications 1 à 6, **caractérisé en ce que** le corps de boîtier (16) et la tige de valve (30) sont réalisés en matière plastique.

8. Système selon l'une des revendications 1 à 7, **caractérisé en ce que** l'unité fonctionnelle (20) à encapsuler est un distributeur pneumatique à pilotage électrique.
